# EUROPEAN PATENT APPLICATION

(11) **EP 1 427 171 A2**
(43) Date of publication of application: **09.06.2004**
(21) Application number: 03015029.6
(22) Date of filing: 02.07.2003
(51) Int. Cl.: H04L 29/12

(54) **User identifying technique on networks having different address systems**

(30) Priority: 05.12.2002 JP 2002012795
(71) Applicant: Allied Telesis Kabushiki Kaisha, Shinagawa-ku, Tokyo 141-8635 (JP)
(72) Inventor: Kato, Hideo, c/o Allied Telesis Kabushiki Kaisha, Shinagawa-ku, Tokyo 141-8635 (JP)
(74) Representative: VOSSIUS & PARTNER

(57) **Abstract**

A user identification device (22) for identifying the user of a user terminal (14a-141) that communicated on the Internet (18), includes a first communication information acquisition section (102) for acquiring first communication information indicating a correspondence between physical ports and MAC addresses from intelligent hubs (16a-16b, 16c-16d), a second communication information acquisition section (104) for acquiring second communication information indicating a correspondence between the MAC addresses and private IP addresses from routers (20a, 20b), a third communication information acquisition section (106) for acquiring third communication information indicating a correspondence between the private IP addresses and global IP addresses from routers, and a port detector (110) for detecting a physical port connected to a user terminal that communicated using a designated global IP address.

## Description

The present invention relates to a technique for identifying the user of a user terminal which communicated through networks having different address systems.

With the rapid growth of the Internet in recent years, there have been reported an increasing number of unlawful acts such as defamation of character, infringement of copyright and invasion of privacy on homepages, electronic bulletin boards, etc.. In consideration of such circumstances, a set of laws concerning limitations on liability relating to compensation for damages and disclosures of sender information for specific telecommunication service providers has recently come into effect in Japan. The set of laws provides for limitations on liability relating to compensation for damages, which should be borne by specific telecommunication service providers including so-called providers, server managers, etc. when an infringement of right is caused by circulation of information via specific telecommunication, and provides for a right to make a claim for the disclosure of sender information. This allows a person who claims to have suffered from infringement of his/her right due to circulation of information via specific telecommunication to claim the disclosure of sender information against relevant providers. Therefore, in order to cope with such sender information disclosure requests, it is desirable that each provider can identify the sender based on information (e.g. IP address of the sender) supplied from the claiming person.

However, in the case where Internet access services are provided to each apartment of an apartment house such as "Internet apartment house", a plurality of users communicate on the Internet by use of the same IP address. In such a case, it is difficult to identify a particular user based on a source IP address and therefore the provider cannot respond quickly to the sender information disclosure request.

An object of the present invention is to provide a user identification technique which can quickly identify a particular user based on a source IP address to solve the above problems.

The object is achieved by a combination of features that are described in each independent claim of the present invention. Dependent claims provide more advantageous examples according to the present invention.

In accordance with a first aspect of the present invention, a user identification system for identifying the user of a user terminal which is placed on a first network having a first address system and communicated on a second network having a second address system, includes: an interconnecting device which is placed on the first network and has a plurality of physical ports connected to respective ones of a plurality of user terminals, wherein the interconnecting device stores a correspondence between the physical ports and terminal identification information of the user terminals connected to the physical ports; a first storage device storing a correspondence between the terminal identification information of the user terminals and first addresses in the first address system assigned to the terminal identification information; a second storage device storing a correspondence between the first addresses and second addresses in the second address system assigned to the first addresses; and a user identification device which acquires communication information from the interconnecting device, the first storage device, and the second storage device and identifies a user of a user terminal that communicated on the second network based on the acquired communication information, wherein the user identification device includes: a first communication information acquisition section for acquiring first communication information from the interconnecting device, wherein the first communication information indicates a correspondence between the physical ports and the terminal identification information; a second communication information acquisition section for acquiring second communication information from the first storage device, wherein the second communication information indicates a correspondence between the terminal identification information and the first addresses; a third communication information acquisition section for acquiring third communication information from the second storage device, wherein the third communication information indicates a correspondence between the first addresses and the second addresses; and a port detector for detecting a first address associated with a designated second address based on the third communication information, terminal identification information associated with the first address based on the second communication information, and a physical port associated with the terminal identification information based on the first communication information.

The interconnecting device may be an intelligent hub including a forwarding database which stores a correspondence between the physical ports and MAC addresses that are the terminal identification information, wherein the interconnecting device sends the first communication information to the user identification device when the forwarding database is updated.

The first storage device may be a DHCP server which assigns a private IP address as a first address to a MAC address as terminal identification information, wherein the first storage device sends the second communication information to the user identification device when a private IP address is assigned to a MAC address.

The first storage device may be an ARP server including an ARP table which stores a MAC address as terminal identification information and a private IP address assigned to the MAC address as a first address, wherein the first storage device sends the second communication information to the user identification device when it has received an ARP request from a user terminal.

The second storage device may include an address converter which assigns a global IP address as a second address to a private IP address as a first address to connect the first network with the second network, wherein the second storage device sends the third communication information to the user identification device when a global IP address is assigned to a private IP address.

In accordance with a second aspect of the present invention, a user identification device in a user identification system including: an interconnecting device which is placed on a first network having a first address system and has a plurality of physical ports connected to respective ones of a plurality of user terminals, wherein the interconnecting device stores a correspondence between the physical ports and terminal identification information of the user terminals connected to the physical ports; a first storage device storing a correspondence between the terminal identification information of the user terminals and first addresses in the first address system assigned to the terminal identification information; and a second storage device storing a correspondence between the first addresses and second addresses in the second address system assigned to the first addresses, wherein the user identification device acquires communication information from the interconnecting device, the first storage device and the second storage device and identifies a user of a user terminal that communicated on a second network having a second address system, based on the acquired communication information, wherein the user identification device comprises: a first communication information acquisition section for acquiring first communication information from the interconnecting device, wherein the first communication information indicates a correspondence between the physical ports and the terminal identification information; a second communication information acquisition section for acquiring second communication information from the first storage device, wherein the second communication information indicates a correspondence between the terminal identification information and the first addresses; a third communication information acquisition section for acquiring third communication information from the second storage device, wherein the third communication information indicates a correspondence between the first addresses and the second addresses; and a port detector for detecting a first address associated with a designated second address based on the third communication information, terminal identification information associated with the first address based on the second communication information, and a physical port associated with the terminal identification information based on the first communication information.

The third communication information acquisition section may acquire the third communication information from the second storage device, wherein the third communication information further associates a destination address of a packet having the second address as its source address with the first address and the second address, and the port may detector detect the first address based on the designated second address and the destination address.

The user identification device may further include a communication information storage section for storing acquisition time information of each of the first communication information, the second communication information and the third communication information, wherein the port detector detects the first address associated with the designated second address by referring to the time information stored in the communication information storage section, detects the terminal identification information associated with the first address, and detects the physical port associated with the terminal identification information.

The first communication information acquisition section may acquire the first communication information from the interconnecting device, wherein the first communication information further associates the physical port and the terminal identification information with device identification information of the interconnecting device, and the port detector detects the device identification information and the physical port that are associated with the terminal identification information.

In accordance with a third aspect of the present invention, a user identification method device in a user identification system including: an interconnecting device which is placed on a first network having a first address system and has a plurality of physical ports connected to respective ones of a plurality of user terminals, wherein the interconnecting device stores a correspondence between the physical ports and terminal identification information of the user terminals connected to the physical ports; a first storage device storing a correspondence between the terminal identification information of the user terminals and first addresses in the first address system assigned to the terminal identification information; and a second storage device storing a correspondence between the first addresses and second addresses in the second address system assigned to the first addresses, the user identification method for acquiring communication information from the interconnecting device, the first storage device and the second storage device and identifies a user of a user terminal that communicated on a second network having a second address system, based on the acquired communication information, comprising the steps of: acquiring first communication information from the interconnecting device, wherein the first communication information indicates a correspondence between the physical ports and the terminal identification information; acquiring second communication information from the first storage device, wherein the second communication information indicates a correspondence between the terminal identification information and the first addresses; acquiring third communication information from the second storage device, wherein the third communication information indicates a correspondence between the first addresses and the second addresses; detecting a first address associated with a designated second address based on the third communication information; detecting terminal identification information associated with the first address based on the second communication information; and detecting a physical port associated with the terminal identification information based on the first communication information.

In accordance with a fourth aspect of the present invention, a program for instructing a computer to implement a user identification device in a user identification system including: an interconnecting device which is placed on a first network having a first address system and has a plurality of physical ports connected to respective ones of a plurality of user terminals, wherein the interconnecting device stores a correspondence between the physical ports and terminal identification information of the user terminals connected to the physical ports; a first storage device storing a correspondence between the terminal identification information of the user terminals and first addresses in the first address system assigned to the terminal identification information; and a second storage device storing a correspondence between the first addresses and second addresses in the second address system assigned to the first addresses, the program for the user identification device which acquires communication information from the interconnecting device, the first storage device and the second storage device and identifies a user of a user terminal that communicated on a second network having a second address system, based on the acquired communication information, comprising the steps of: acquiring first communication information from the interconnecting device, wherein the first communication information indicates a correspondence between the physical ports and the terminal identification information; acquiring second communication information from the first storage device, wherein the second communication information indicates a correspondence between the terminal identification information and the first addresses; acquiring third communication information from the second storage device, wherein the third communication information indicates a correspondence between the first addresses and the second addresses; detecting a first address associated with a designated second address based on the third communication information; detecting terminal identification information associated with the first address based on the second communication information; and detecting a physical port associated with the terminal identification information based on the first communication information.

In accordance with a fifth aspect of the present invention, a user identification system for identifying a user of a user terminal which is placed on a first network having a first address system and communicated on a second network having a second address system, includes: an interconnecting device which is placed on the first network and has a plurality of physical ports connected to respective ones of a plurality of user terminals; an address converter conducting address conversion between first addresses in the first address system and second addresses in the second address system to relay communications between the first network and the second network; and a user identification device acquiring port information from the address conversion device, detecting a physical port associated with a designated second address based on the port information, and identifying the user of a user terminal connected to the physical port, wherein the address converter comprises: a first communication information acquisition section for acquiring first communication information from the interconnecting device, wherein the first communication information indicates a correspondence between the physical ports and the terminal identification information; a second communication information storage section for storing second communication information which indicates a correspondence between the terminal identification information and first addresses assigned to the terminal identification information; a third communication information storage section for storing third communication information which indicates a correspondence between the first addresses and second addresses assigned to respective ones of the first addresses; and a port information generation section for generating the port information based on the first communication information, the second communication information and the third communication information, wherein the port information indicates a correspondence between second addresses and physical ports connected to user terminals that communicated on the second network using the second addresses.

In accordance with a fifth aspect of the present invention, an address converter conducting address conversion between first addresses in a first address system and second addresses in a second address system to relay communications between a first network having the first address system and a second network having the second address system, includes: a first communication information acquisition section for acquiring first communication information from an interconnecting device which is placed on the first network and has a plurality of physical ports connected to respective ones of a plurality of user terminals, wherein the first communication information indicates a correspondence between the physical ports and terminal identification information of the user terminals connected to the physical ports; a second communication information storage section for storing second communication information which indicates a correspondence between the terminal identification information and the first addresses assigned to the terminal identification information; a third communication information storage section for storing third communication information which indicates a correspondence between the first addresses and the second addresses assigned to the first addresses; and a port information generation section for generating port information based on the first communication information, the second communication information and the third communication information, wherein the port information indicates a correspondence between the second addresses and physical ports connected to user terminals that communicated on the second network using the second addresses.
Fig. 1 is a block diagram showing an example of the system configuration of a user identification system in accordance with a first embodiment of the present invention;
Fig. 2 is a block diagram showing an example of the composition of a user identification device according to the first embodiment;
Fig. 3 is a table showing an example of data structure of a communication information storage section of the user identification device according to the first embodiment;
Fig. 4 is a schematic diagram showing an example of a user identification method employed by the user identification system of the first embodiment;
Fig. 5 is a block diagram showing an example of the hardware configuration of the user identification device according to the first embodiment;
Fig. 6 is a block diagram showing an example of the system configuration of a user identification system in accordance with a second embodiment of the present invention; and
Fig. 7 is a block diagram showing an example of the composition of a router according to the second embodiment.

Referring now to the drawings, a description will be given in detail of preferred embodiments in accordance with the present invention. While the present invention will be described with reference to the following embodiments, they are not intended to restrict the scope of the present invention described in the claims. Not all the features described in each embodiment are necessarily for resolving the above problem.

### [Embodiment 1]

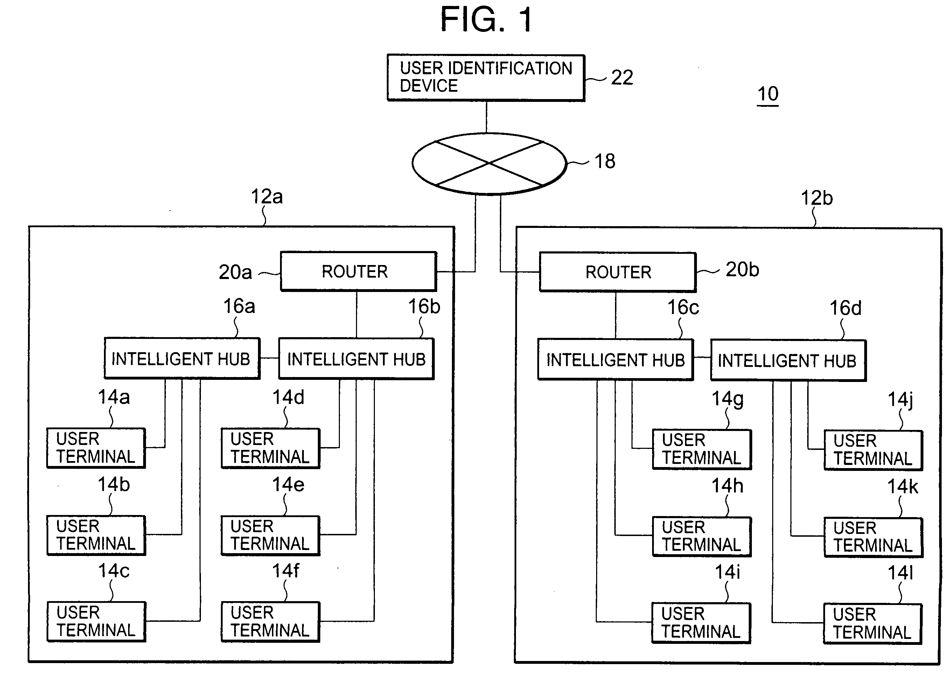

Referring to Fig. 1, a user identification system 10 according to a first embodiment of the present invention includes: intelligent hubs 16a - 16d each of which is placed in a LAN (Local Area Network) 12a or 12b and is provided with a plurality of physical ports to which a plurality of user terminals (14a - 14l) are connected respectively; routers 20a and 20b for connecting the LANs 12a and 12b with the Internet 18; and a user identification device 22 for identifying the user of a user terminal that communicated on the Internet 18. It should be noted that each LAN (12a, 12b) is an example of a first network having a first address system and the Internet 18 is an example of a second network having a second address system in the present invention. Each LAN (12a, 12b) is constructed in, for example, an apartment house such as an Internet apartment house equipped with facilities for Internet access, in which communication between user terminals is restricted by a VLAN (Virtual LAN) function of the intelligent hubs 16a - 16d. It should be noted that a private IP address is an example of a first address in the first address system and a global IP address is an example of a second address in the second address system in the present invention.

Each intelligent hub (16a/16b/16c/16d), as an example of an interconnecting device in the present invention, has a plurality of physical ports connected to respective ones of corresponding user terminals (14a-14c/14d-14f/14g-14i/14j-14l). Each intelligent hub (16a - 16d) is provided with a forwarding database storing information indicating a correspondence between each physical port of the intelligent hub and terminal identification information (here, MAC address) identifying a user terminal connected to the physical port. The intelligent hub (16a - 16d) sends to the user identification device 22 first communication information concerning correspondence between each physical port and terminal identification information stored in the forwarding database. The first communication information may further include device identification information of a corresponding intelligent hub itself in addition to the correspondence information between the physical port and terminal identification information.

The first communication information is sent from the intelligent hub (16a - 16d) to the user identification device 22, for example, when the forwarding database has been updated. The intelligent hub (16a - 16d) may also send the first communication information to the user identification device 22 when a MAC address has been deleted from the forwarding database, for example. In the case where a plurality of VLANs are assigned to a plurality of physical ports, the intelligent hub (16a - 16d) may also associate a VLAN name (instead of a physical port) to the terminal identification information. In this case, the intelligent hub (16a - 16d) may send to the user identification device 22 information concerning the correspondence between each VLAN name and the terminal identification information as the first communication information. The transmission of the first communication information from the intelligent hub (16a - 16d) to the user identification device 22 can be conducted using, for example, Syslog Message, Trap of SNMP (Simple Network Management Protocol), etc.

Each router (20a, 20b), as an example of a first storage device in the present invention, stores information indicating a correspondence between the terminal identification information of each of corresponding user terminals and each private IP address assigned to each terminal identification information. The router (20a, 20b), including a DHCP server, carries out the assignment/releasing of a private IP address for a MAC address which is terminal identification information of each user terminal. The router (20a, 20b) sends to the user identification device 22 second communication information indicating a correspondence between a MAC address and the private IP address assigned thereto. The second communication information is sent to the user identification device 22 when the router (20a, 20b) has assigned a private IP address to a MAC address, for example. The second communication information may also be sent to the user identification device 22 when the router (20a, 20b) has released a private IP address, for example.

The router (20a, 20b) further includes an ARP server which is provided with an ARP table storing information indicating a correspondence between MAC addresses that are terminal identification information of the user terminals and private IP addresses each assigned to the MAC addresses. The MAC address and the private IP address associated with each other are sent by the router (20a, 20b) to the user identification device 22 as the second communication information when the router (20a, 20b) has received an ARP request from a user terminal, for example. The second communication information may also be sent to the user identification device 22 when the router (20a, 20b) has returned an ARP reply to a user terminal, for example. The transmission of the second communication information from the router (20a, 20b) to the user identification device 22 can be conducted using, for example, Syslog Message, Trap of SNMP, etc.

The router (20a, 20b) is also an example of a second storage device in the present invention, which stores information indicating a correspondence between a private IP address assigned to each user terminal and a global IP address assigned to the private IP address. The router (20a, 20b) includes an address converter which performs conversion between a global IP address and a private IP address for each packet received from the LAN (12a, 12b) or the Internet 18, thereby relaying packets between the LAN (12a, 12b) and the Internet 18. The router (20a, 20b) also sends to the user identification device 22 third communication information indicating a correspondence between the private IP address and the global IP address stored therein. The third communication information is sent to the user identification device 22 when a global IP address has been assigned to a private IP address, for example. The transmission of the third communication information from the router (20a, 20b) to the user identification device 22 can be conducted using, for example, Syslog Message, Trap of SNMP, etc.

The third communication information may be also sent to the user identification device 22 when the router (20a, 20b) has released a global IP address, for example. In the case where the router (20a, 20b) has IP masquarade function, the router (20a, 20b) may store a private IP address assigned to each user terminal together with a global IP address and a port number assigned to the private IP address and then send to the user identification device 22 the third communication information indicating a correspondence of the private IP address, the global IP address and the port number being associated with one another.

The router (20a, 20b) may also associate the private IP address and the global IP address further with a destination address of a packet having the global IP address as its source address and send the private IP address, the global IP address and the destination address being associated with one another to the user identification device 22 as the third communication information. The third communication information may be sent to the user identification device 22 when the router (20a, 20b) relays communication between a user terminal and the Internet 18, for example.

The user identification device 22 detects the physical port of an intelligent hub (16a - 16d) to which a user terminal that has communicated on the Internet 18 is connected, based on the first communication information received from the intelligent hub (16a - 16d) and the second and third communication information received from the router (20a, 20b), and thereby identifies the user of the user terminal. Incidentally, while the user identification device 22 is placed on the Internet 18 as shown in Fig. 1, it can also be placed in the LAN 12a or 12b.

The router (20a, 20b) converts the source IP address of a packet received from a user terminal (14a - 14l) from the private IP address assigned to the user terminal (14a - 14l) to the global IP address assigned to the router (20a, 20b), and sends the packet to the Internet 18. Therefore, it is generally impossible to identify the user terminal (14a - 14l) from the source IP address of a packet transmitted from the router 20a or 20b to the Internet 18. Even in such cases, the user identification system 10 according to this embodiment makes it possible to identify the user of a user terminal (14a - 14l) that communicated on the Internet 18.

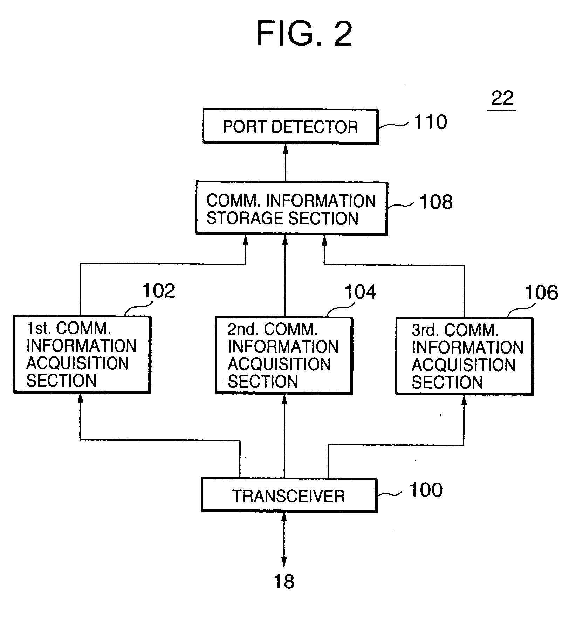

Referring to Fig. 2, the user identification device 22 includes: a transceiver 100 which transmits/receives data to/from the Internet 18; a first communication information acquisition section 102 which acquires the first communication information indicating a correspondence of the physical port, the MAC address and the device identification information from the intelligent hubs 16a - 16d via the transceiver 100; a second communication information acquisition section 104 which acquires the second communication information indicating a correspondence of the MAC address and the private IP address from the routers 20a and 20b via the transceiver 100; a third communication information acquisition section 106 which acquires the third communication information indicating a correspondence of the private IP address and the global IP address from the routers 20a and 20b via the transceiver 100; a communication information storage section 108 which stores the first through third communication information; and a port detector 110 which detects a physical port connected to a user terminal that has communicated on the Internet 18 using a global IP address designated by an administrator.

The port detector 110 refers to the communication information stored in the communication information storage section 108, detects a private IP address associated with the global IP address designated by the administrator based on the third communication information, detects a MAC address associated with the private IP address based on the second communication information, and detects device identification information and a physical port associated with the MAC address based on the first communication information. In this manner, the user identification device 22 identifies the user of a user terminal communicating via the physical port detected by the port detector 110.

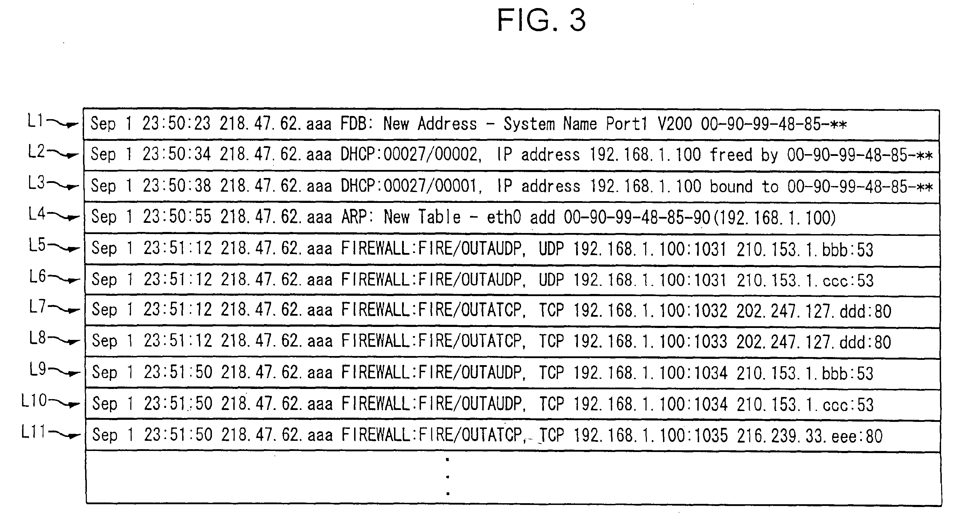

As shown in Fig. 3, the communication information storage section 108 stores acquisition time information of each of the first, second and third communication information acquired from intelligent hubs 16a-16d or routers 20a and 20b with corresponding to the acquired first, second and third communication information.

The first line (L1) indicates first communication information which has been acquired by the first communication information acquisition section 102 from the forwarding database (FDB) of an intelligent hub. The communication information storage section 108 stores, as shown in the first line L1, the first communication information indicating a correspondence of: time "Sep 1 23:50:23"; a global IP address "218.47.62.aaa" of a router; device identification information "System Name" of the intelligent hub; a physical port "Port 1"; a VLAN name "V200"; and a MAC address "00-90-99-48-85-**" of a user terminal.

The second and third lines (L2, L3) indicate second communication information that has been acquired by the second communication information acquisition section 104 from the DHCP server of a router. The communication information storage section 108 stores, as shown in the second line (L2), the second communication information indicating a correspondence of: time "Sep 1 23:50:34"; a global IP address "218.47.62.aaa" of the router; a private IP address "192.168.1.100"; and a MAC address "00-90-99-48-85-**". The second communication information indicates that the private IP address "192.168.1.100" which had been assigned to the MAC address "00-90-99-48-85-**" was released at the time "Sep 1 23:50:34". The communication information storage section 108 stores, as shown in the third line (L3), the second communication information indicating a correspondence of: time "Sep 1 23:50:38"; a global IP address "218.47.62.aaa" of the router; a private IP address "192.168.1.100"; and a MAC address "00-90-99-48-85-**". The second communication information indicates that the private IP address "192.168.1.100" was assigned to the MAC address "00-90-99-48-85-**" at the time "Sep 1 23:50:34".

The fourth line (L4) indicates second communication information that has been acquired by the second communication information acquisition section 104 from the ARP table of a router. The communication information storage section 108 stores, as shown in the fourth line (L4), the second communication information indicating a correspondence of: time "Sep 1 23:50:55"; a global IP address "218.47.62.aaa" of the router; a MAC address "00-90-99-48-85-90"; and a private IP address "192.168.1.100". The second communication information indicates that a combination of the MAC address "00-90-99-48-85-90" and the private IP address "192.168.1.100" was added to the ARP table at the time "Sep 1 23:50:55".

The fifth line (L5) indicates third communication information that has been acquired by the third communication information acquisition section 106 from a Firewall server, which is an example of the aforementioned address converter of a router. The communication information storage section 108 stores, as shown in the fifth line (L5), the third communication information indicating a correspondence of: time "Sep 1 23:51:12"; a global IP address "218.47.62.aaa" of the router; a private IP address and port number "192.168.1.100:1031"; and a global IP address and port number "210.153.1.bbb:53" as the destination address of a packet. The third communication information indicates that a user terminal having the private IP address "192.168.1.100" assigned thereto has transmitted a packet to a communication device having the global IP address "210.153.1.bbb" by UDP (User Data Protocol) at the time "Sep 1 23:51:12". The sixth through eleventh lines (L6 - L11) indicate third communication information similar to that of the fifth line (L5).

For example, when a global IP address "218.47.62.aaa", a destination address "210.153.1.bbb" and time are designated by an administrator, the port detector 110 refers to time stored in the communication information storage section 108 and detects a private IP address "192.168.1.100" associated with the global IP address "218.47.62.aaa" and the destination address "210.153.1.bbb" based on the third communication information of the ninth line (L9). Subsequently, the port detector 110 detects a MAC address "00-90-99-48-85-90" associated with the private IP address "192.168.1.100" based on the second communication information of the fourth line (L4). Then, the port detector 110 detects device identification information "System Name" and a physical port "Port 1" associated with the MAC address "00-90-99-48-85-** based on the first communication information of the first line (L1).

As described above, the communication information storage section 108 stores the first through third communication information associated with time and the port detector 110 refers to the time information stored in the communication information storage section 108 to detect a physical port, resulting in precise detection of the physical port and reliable identification of the user.

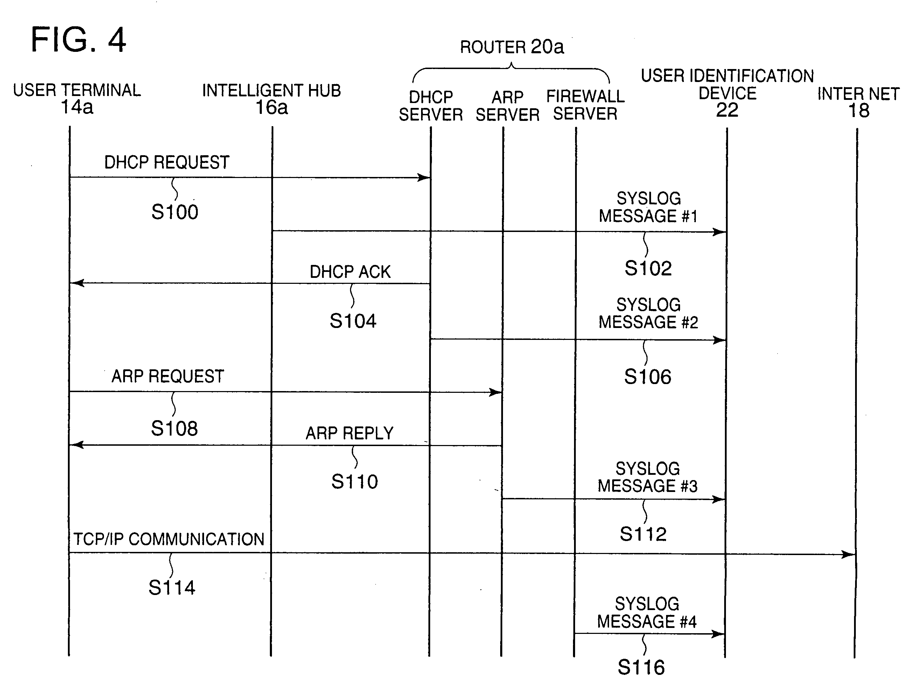

Referring to Fig. 4, when powered up, the user terminal 14a sends DHCP Request to the DHCP server of the router 20a (S100). When relaying the DHCP Request between the user terminal 14a and the router 20a, the intelligent hub 16a updates the forwarding database and sends Syslog Message #1 including first communication information indicating a correspondence between a physical port to which the user terminal 14a is connected and a MAC address of the user terminal 14a to the user identification device 22 (S102). The first communication information acquisition section 102 of the user identification device 22 acquires the first communication information from the intelligent hub 16a.

Subsequently, the DHCP server of the router 20a assigns a private IP address to the MAC address of the user terminal 14a and sends DHCP Ack back to the user terminal 14a (S104). Thereafter, the router 20a sends Syslog Message #2 including second communication information indicating a correspondence between the MAC address of the user terminal 14a and the private IP address assigned to the MAC address to the user identification device 22 (S106). The second communication information acquisition section 104 of the user identification device 22 acquires the second communication information from the router 20a.

Subsequently, the user terminal 14a sends ARP Request to the ARP server of the router 20a (S108). The ARP server of the router 20a refers to its ARP table and sends ARP Reply back to the user terminal 14a (S110). The router 20a sends Syslog Message #3 including second communication information stored in the ARP table, indicating a correspondence between the MAC address and the private IP address of the user terminal 14a to the user identification device 22 (S112). The second communication information acquisition section 104 of the user identification device 22 acquires the second communication information from the router 20a.

Subsequently, the user terminal 14a communicates on the Internet 18 by TCP/IP (S114). When relaying communication between the user terminal 14a and the Internet 18, the Firewall server of the router 20a assigns a global IP address to the private IP address of the user terminal 14a. The router 20a sends Syslog Message #4 including third communication information indicating a correspondence between the private IP address of the user terminal 14a and the global IP address assigned to the private IP address to the user identification device 22 (S116).

The port detector 110 of the user identification device 22 detects a physical port of the intelligent hub 16a that is connected to the user terminal 14a that has communicated on the Internet 18, based on the first communication information acquired from the intelligent hub 16a and the second and third communication information acquired from the router 20a, and thereby identifies the user of the user terminal 14a.

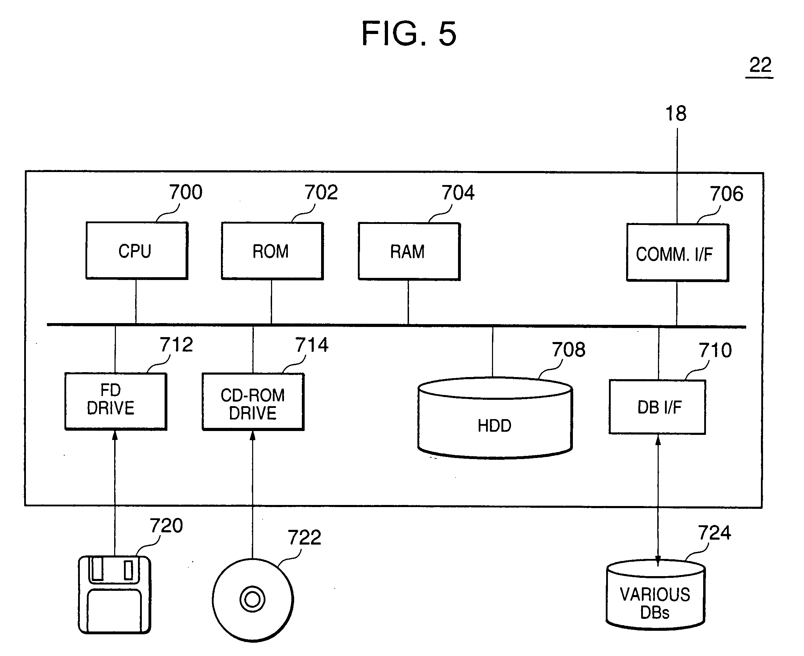

Referring to Fig. 5, the user identification device 22 includes a CPU (Central Processing Unit) 700, a ROM (Read Only Memory) 702, a RAM (Random Access Memory) 704, a communication interface 706, a hard disk drive 708, a database interface 710, a flexible disk drive 712, and a CD-ROM drive 714. The CPU 700 controls operations of the user identification device 22 by running programs stored in the ROM 702 and RAM 704. The communication with the Internet 18 is performed through the communication interface 706. The database interface 710 conducts reading and writing of data and update of database contents.

The flexible disk drive 712 reads out a program or data from a flexible disk 720 to provide it to the CPU 700. The CD-ROM drive 714 reads out a program or data from a CD-ROM 722 to provide it to the CPU 700. The database interface 710 is connected with various databases 724 to transmit/receive data.

The program stored in record media such as a flexible disk 720 or a CD-ROM 722 is supplied to the user identification device 22 by the user. The program stored in a record medium may either be compressed or uncompressed. The program is read out from the record medium and is executed by the CPU 700.

The program stored in the record medium to installed in the user identification device 22 is functionally composed of a transmission/reception module, a first communication information acquisition module, a second communication information acquisition module, a third communication information acquisition module, a communication information storage module, and a port detection module. The operation of the user identification device 22 driven by each module is the same as that of each corresponding part of the user identification device 22 as explained in Figs. 1-4 and therefore the descriptions thereof are omitted.

The flexible disk 720 or CD-ROM 722 as an example of the record medium may store one or more programs for implementing all or part of the functions/operations of the user identification device 22 described in all embodiments of the present invention.

The program may be read out directly from the record medium into the RAM 704 to be executed. Alternatively, the program may be previously installed in the hard disk drive 708 and thereafter it may be read out from the hard disk drive into the RAM 704 to be executed. The program may either be stored in a single record medium or in two or more record media. The program may be encoded, compressed and/or encrypted to be stored.

Other than flexible disks and CD-ROMs, optical record media such as DVDs and PDs, magneto-optic record media such as MDs, tape record media, magnetic recording media, semiconductor memories employed in IC cards, Miniature cards and the likes can also be employed as the record media. It is also possible to use as the record medium a storage device (HDD, RAM, etc.) of a server system that is connected to a network (Internet, private network, etc.) and supply the program from the storage device to the user identification device 22 via the network.

### [Embodiment 2]

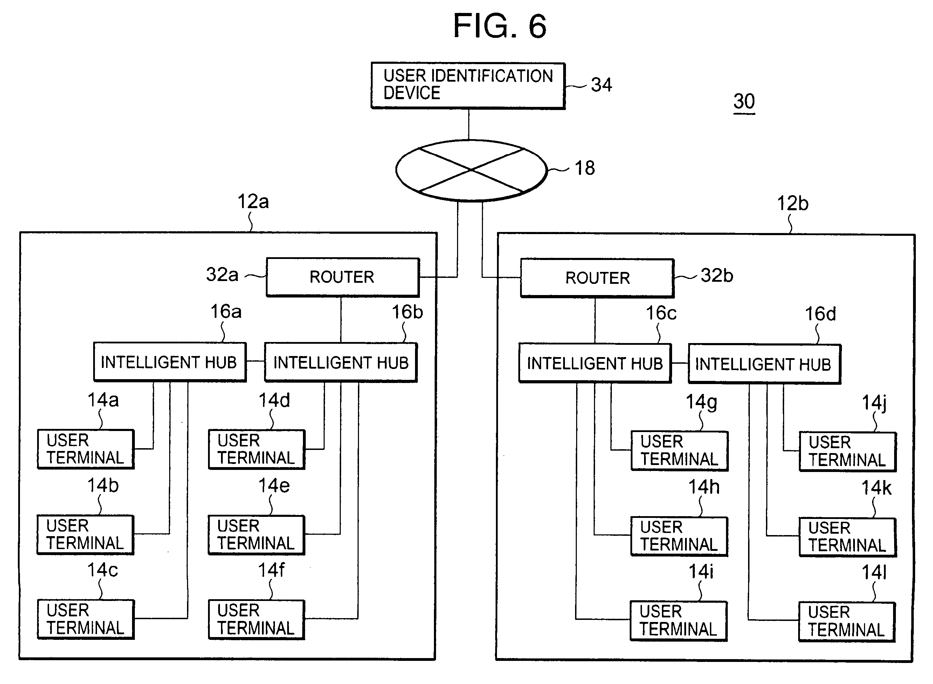

Referring to Fig. 6, the configuration and operation of the user identification system 30 may be the same as those of the user identification system 10 of the first embodiment, except for the points described below.

The user identification system 30 according to a second embodiment of the present invention includes: intelligent hubs 16a - 16d each of which is placed in a LAN 12a or 12b and is provided with a plurality of physical ports to which a plurality of user terminals (14a - 14l) are connected respectively; routers 32a and 32b for connecting the LANs 12a and 12b with the Internet 18; and a user identification device 34 for identifying the user of a user terminal that communicated on the Internet 18.

Each router (32a, 32b), as an example of an address converter in the present invention, carries out address conversion between private IP addresses and global IP addresses, thereby relaying communications between the Internet 18 and the LANs 12a and 12b. Each router (32a, 32b) generates port information based on the first through third communication information and sends it to the user identification device 34, the port information indicating a correspondence between a global IP address and a physical port of an intelligent hub connected to a user terminal that has communicated on the Internet 18 by use of the global IP address. The user identification device 34 acquires the port information from the router (32a, 32b) , detects a physical port of an intelligent hub associated with a global IP address designated by an administrator based on the port information, and thereby identifies the user of a user terminal connected to the physical port.

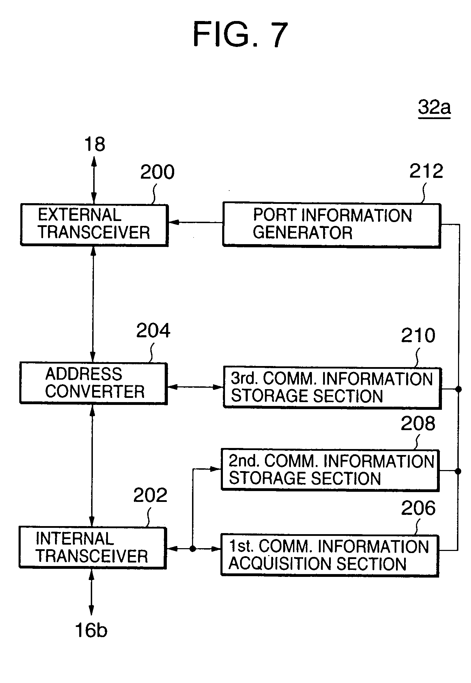

As shown in Fig. 7, the router 32a includes: an external transceiver 200 which transmits/receives data to/from the Internet 18; an internal transceiver 202 which transmits/receives data to/from the LAN 12a; an address converter 204 which carries out address conversion between private IP addresses and global IP addresses for received packets between the external transceiver 200 and the internal transceiver 202 by assigning a global IP address to a private IP address of a user terminal; a first communication information acquisition section 206 which acquires the first communication information from the intelligent hubs 16a and 16b; a second communication information storage section 208 which stores the second communication information; a third communication information storage section 210 which stores the third communication information; and a port information generation section 212 which generates the port information indicating a correspondence between a global IP address and a physical port of an intelligent hub based on the first through third communication information.

The first communication information acquisition section 206 acquires the first communication information indicating a correspondence of a physical port, a MAC address and device identification information, from the intelligent hubs 16a and 16b via the internal transceiver 202.

The second communication information storage section 208 may function as a DHCP server for example, which assigns a private IP address to a MAC address (as the terminal identification information of a user terminal) and releases it. The second communication information storage section 208 stores the terminal identification information of the user terminal and the private IP address assigned to the terminal identification information, which are related to each other. The second communication information storage section 208 may also function as an ARP server which includes an ARP table in which MAC addresses (as the terminal identification information of the user terminals) and private IP addresses assigned to the MAC addresses are stored with related to each other.

The third communication information storage section 210, which is an address conversion table for the address converter 204, stores the private IP address of each user terminal and global IP address assigned to the private IP address.

The port information generation section 212 generates the port information indicating a correspondence between a global IP address and a physical port of an intelligent hub connected to a user terminal that communicated on the Internet 18 by use of the global IP address, based on the first through third communication information, and sends the generated port information to the user identification device 34 via the external transceiver 200.

As described above, in the user identification system 30 according to the second embodiment of the present invention, each router (32a, 32b) generates the port information based on the first through third communication information and sends the port information to the user identification device 34, resulting in the reduced amount of data transmitted from each router to the user identification device, compared with the first embodiment. Especially when a lot of LANs are managed by each user identification device, the amount of data managed and processed by the user identification device can be reduced and thereby storage resources of the user identification device 34 can be used efficiently.

As set forth hereinabove, according to the present invention, it becomes possible to identify the user of a user terminal that communicated on the Internet via a router that carries out address conversion between private IP addresses and global IP addresses.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. A user identification system for identifying the user of a user terminal (14a-14l) which is placed on a first network (12a, 12b) having a first address system and communicated on a second network (18) having a second address system, comprising:
an interconnecting device (16a-16b, 16c-16d) which is placed on the first network and has a plurality of physical ports connected to respective ones of a plurality of user terminals, wherein the interconnecting device stores a correspondence between the physical ports and terminal identification information of the user terminals connected to the physical ports;
a first storage device (20a, 20b) storing a correspondence between the terminal identification information of the user terminals and first addresses in the first address system assigned to the terminal identification information;
a second storage device (20a, 20b) storing a correspondence between the first addresses and second addresses in the second address system assigned to the first addresses; and
a user identification device (22) which acquires communication information from the interconnecting device, the first storage device, and the second storage device and identifies a user of a user terminal that communicated on the second network based on the acquired communication information,
wherein the user identification device includes:
a first communication information acquisition section (102) for acquiring first communication information from the interconnecting device, wherein the first communication information indicates a correspondence between the physical ports and the terminal identification information;
a second communication information acquisition section (104) for acquiring second communication information from the first storage device, wherein the second communication information indicates a correspondence between the terminal identification information and the first addresses;
a third communication information acquisition section (106) for acquiring third communication information from the second storage device, wherein the third communication information indicates a correspondence between the first addresses and the second addresses; and
a port detector (110) for detecting a first address associated with a designated second address based on the third communication information, terminal identification information associated with the first address based on the second communication information, and a physical port associated with the terminal identification information based on the first communication information.

2. The user identification system according to claim 1, wherein the interconnecting device is an intelligent hub including a forwarding database which stores a correspondence between the physical ports and MAC addresses that are the terminal identification information, wherein the interconnecting device sends the first communication information to the user identification device when the forwarding database is updated.

3. The system according to claim 1 or 2,
wherein the first storage device is a DHCP server which assigns a private IP address as a first address to a MAC address as terminal identification information, wherein the first storage device sends the second communication information to the user identification device when a private IP address is assigned to a MAC address.

4. The system according to claim 1 or 2,
wherein the first storage device is an ARP server including an ARP table which stores a MAC address as terminal identification information and a private IP address assigned to the MAC address as a first address, wherein the first storage device sends the second communication information to the user identification device when it has received an ARP request from a user terminal.

5. The system according to claim 1, 2, 3 or 4,
wherein the second storage device includes an address converter which assigns a global IP address as a second address to a private IP address as a first address to connect the first network with the second network, wherein the second storage device sends the third communication information to the user identification device when a global IP address is assigned to a private IP address.

6. A user identification device (22) in a user identification system including:
an interconnecting device (16a-16b, 16c-16d) which is placed on a first network having a first address system and has a plurality of physical ports connected to respective ones of a plurality of user terminals, wherein the interconnecting device stores a correspondence between the physical ports and terminal identification information of the user terminals connected to the physical ports;
a first storage device (20a, 20b) storing a correspondence between the terminal identification information of the user terminals and first addresses in the first address system assigned to the terminal identification information; and
a second storage device (20a, 20b) storing a correspondence between the first addresses and second addresses in the second address system assigned to the first addresses,
wherein the user identification device acquires communication information from the interconnecting device, the first storage device and the second storage device and identifies a user of a user terminal that communicated on a second network having a second address system, based on the acquired communication information, wherein the user identification device (22) comprises:
a first communication information acquisition section (102) for acquiring first communication information from the interconnecting device, wherein the first communication information indicates a correspondence between the physical ports and the terminal identification information;
a second communication information acquisition section (103) for acquiring second communication information from the first storage device, wherein the second communication information indicates a correspondence between the terminal identification information and the first addresses;
a third communication information acquisition section (104) for acquiring third communication information from the second storage device, wherein the third communication information indicates a correspondence between the first addresses and the second addresses; and
a port detector (110) for detecting a first address associated with a designated second address based on the third communication information, terminal identification information associated with the first address based on the second communication information, and a physical port associated with the terminal identification information based on the first communication information.

7. The user identification device according to claim 6, wherein
the third communication information acquisition section acquires the third communication information from the second storage device, wherein the third communication information further associates a destination address of a packet having the second address as its source address with the first address and the second address, and
the port detector detects the first address based on the designated second address and the destination address.

8. The device according to claim 6 or 7,
further comprising a communication information storage section (108) for storing acquisition time information of each of the first communication information, the second communication information and the third communication information,
wherein the port detector (110) detects the first address associated with the designated second address by referring to the time information stored in the communication information storage section, detects the terminal identification information associated with the first address, and detects the physical port associated with the terminal identification information.

9. The device according to claim 6, 7 or 8,
wherein the first communication information acquisition section acquires the first communication information from the interconnecting device, wherein the first communication information further associates the physical port and the terminal identification information with device identification information of the interconnecting device, and
the port detector detects the device identification information and the physical port that are associated with the terminal identification information.

10. A user identification method device in a user identification system including: an interconnecting device which is placed on a first network having a first address system and has a plurality of physical ports connected to respective ones of a plurality of user terminals, wherein the interconnecting device stores a correspondence between the physical ports and terminal identification information of the user terminals connected to the physical ports; a first storage device storing a correspondence between the terminal identification information of the user terminals and first addresses in the first address system assigned to the terminal identification information; and a second storage device storing a correspondence between the first addresses and second addresses in the second address system assigned to the first addresses,
the user identification method for acquiring communication information from the interconnecting device, the first storage device and the second storage device and identifies a user of a user terminal that communicated on a second network having a second address system, based on the acquired communication information, comprising the steps of:
acquiring first communication information from the interconnecting device, wherein the first communication information indicates a correspondence between the physical ports and the terminal identification information;
acquiring second communication information from the first storage device, wherein the second communication information indicates a correspondence between the terminal identification information and the first addresses;
acquiring third communication information from the second storage device, wherein the third communication information indicates a correspondence between the first addresses and the second addresses;
detecting a first address associated with a designated second address based on the third communication information;
detecting terminal identification information associated with the first address based on the second communication information; and
detecting a physical port associated with the terminal identification information based on the first communication information.

11. A program for instructing a computer to implement a user identification device in a user identification system including: an interconnecting device which is placed on a first network having a first address system and has a plurality of physical ports connected to respective ones of a plurality of user terminals, wherein the interconnecting device stores a correspondence between the physical ports and terminal identification information of the user terminals connected to the physical ports; a first storage device storing a correspondence between the terminal identification information of the user terminals and first addresses in the first address system assigned to the terminal identification information; and a second storage device storing a correspondence between the first addresses and second addresses in the second address system assigned to the first addresses,
the program for the user identification device which acquires communication information from the interconnecting device, the first storage device and the second storage device and identifies a user of a user terminal that communicated on a second network having a second address system, based on the acquired communication information, comprising the steps of:
acquiring first communication information from the interconnecting device, wherein the first communication information indicates a correspondence between the physical ports and the terminal identification information;
acquiring second communication information from the first storage device, wherein the second communication information indicates a correspondence between the terminal identification information and the first addresses;
acquiring third communication information from the second storage device, wherein the third communication information indicates a correspondence between the first addresses and the second addresses;
detecting a first address associated with a designated second address based on the third communication information;
detecting terminal identification information associated with the first address based on the second communication information; and
detecting a physical port associated with the terminal identification information based on the first communication information.

12. A user identification system for identifying a user of a user terminal (14a-14l) which is placed on a first network (12a, 12b) having a first address system and communicated on a second network (18) having a second address system, comprising:
an interconnecting device (16a-16b, 16c-16d) which is placed on the first network and has a plurality of physical ports connected to respective ones of a plurality of user terminals;
an address converter (32a, 32b, 204) conducting address conversion between first addresses in the first address system and second addresses in the second address system to relay communications between the first network and the second network; and
a user identification device (34) acquiring port information from the address conversion device, detecting a physical port associated with a designated second address based on the port information, and identifying the user of a user terminal connected to the physical port,
wherein the address converter (32a, 32b) comprises:
a first communication information acquisition section (206) for acquiring first communication information from the interconnecting device, wherein the first communication information indicates a correspondence between the physical ports and the terminal identification information;
a second communication information storage section (208) for storing second communication information which indicates a correspondence between the terminal identification information and first addresses assigned to the terminal identification information;
a third communication information storage section (210) for storing third communication information which indicates a correspondence between the first addresses and second addresses assigned to respective ones of the first addresses; and
a port information generation section (212) for generating the port information based on the first communication information, the second communication information and the third communication information, wherein the port information indicates a correspondence between second addresses and physical ports connected to user terminals that communicated on the second network using the second addresses.

13. An address converter (32a, 32b) conducting address conversion between first addresses in a first address system and second addresses in a second address system to relay communications between a first network having the first address system and a second network having the second address system, comprising:
a first communication information acquisition section (206) for acquiring first communication information from an interconnecting device which is placed on the first network and has a plurality of physical ports connected to respective ones of a plurality of user terminals, wherein the first communication information indicates a correspondence between the physical ports and terminal identification information of the user terminals connected to the physical ports;
a second communication information storage section (208) for storing second communication information which indicates a correspondence between the terminal identification information and the first addresses assigned to the terminal identification information;
a third communication information storage section (210) for storing third communication information which indicates a correspondence between the first addresses and the second addresses assigned to the first addresses; and
a port information generation section (212) for generating port information based on the first communication information, the second communication information and the third communication information, wherein the port information indicates a correspondence between the second addresses and physical ports connected to user terminals that communicated on the second network using the second addresses.

14. A method for identifying one of a plurality of user terminals connected to respective ones of physical ports of a first network, where local addresses are assigned to respective ones of the user terminals, wherein the first network is connected to a second network composed of a plurality of first networks each having unique addresses assigned thereto, the method comprising the steps of:
storing a first correspondence between physical ports and the user terminals, a second correspondence between the user terminals and the local addresses, and a third correspondence between the local addresses and the unique addresses;
designating a unique address which has been used for communication on the second network; and
identifying a user terminal corresponding to the designated unique address based on the first, second and third correspondences.

15. The method according to claim 14, wherein the first, second and third correspondences are received from the first network through the second network.

16. A method for identifying one of a plurality of user terminals connected to respective ones of physical ports of a first network, where local addresses are assigned to respective ones of the user terminals, wherein the first network is connected to a second network composed of a plurality of first networks each having unique addresses assigned thereto, the method comprising the steps of:
at the first network,
storing a first correspondence between physical ports and the user terminals, a second correspondence between the user terminals and the local addresses, and a third correspondence between the local addresses and the unique addresses;
generating a port correspondence between the physical ports and the unique addresses from the first, second and third correspondences;
sending the port correspondence to a user identification device through the second network;
at the user identification device,
designating a unique address which has been used for communication on the second network; and
identifying a user terminal corresponding to the designated unique address based on the port correspondence.
